# EUROPÄISCHE PATENTANMELDUNG

(11) **EP 4 345 181 A1**
(43) Veröffentlichungstag der Anmeldung: **03.04.2024**
(21) Anmeldenummer: 22020470.5
(22) Anmeldetag: 29.09.2022
(51) Int. Cl.: C22C 1/10, C22C 32/00, B22F 10/14, B22F 7/06

(54) **VERFAHREN ZUR AUSSTATTUNG EINER HOCHTEMPERATURKOMPONENTE MIT EINEM HOCHTEMPERATURFESTEN MATERIAL, HOCHTEMPERATURKOMPONENTE UND VERFAHREN, IN DEM EINE HOCHTEMPERATURKOMPONENTE EINGESETZT WIRD**

(71) Anmelder: Linde GmbH, 82049 Pullach (DE)
(72) Erfinder: Ranke, Harald, 82049 Pullach (DE); Ohlig, Klaus, 82049 Pullach (DE); Schatz, Kati, 82049 Pullach (DE); Grundwürmer, Matthias, 82049 Pullach (DE)
(74) Vertreter: Fischer, Werner

(57) **Zusammenfassung**

Es wird ein Verfahren zur Ausstattung einer Hochtemperaturkomponente mit einem hochtemperaturfesten Material vorgeschlagen, wobei das hochtemperaturfeste Material eine oxiddispersionsverfestigte Superlegierung aufweist und unter Verwendung eines additiven Fertigungsverfahrens in zumindest einem Teilbereich der Hochtemperaturkomponente bereitgestellt wird. Eine entsprechende Hochtemperaturkomponente und ein Verfahren, in dem eine entsprechende Hochtemperaturkomponente eingesetzt wird, sind ebenfalls Gegenstand der Erfindung.

## Beschreibung

Die Erfindung betrifft ein Verfahren zur Ausstattung einer Hochtemperaturkomponente, insbesondere eines Hochtemperaturbrenners, mit einem hochtemperaturfesten Material, eine mittels eines entsprechenden Verfahrens mit einem hochtemperaturfesten Material ausgestattete Hochtemperaturkomponente, und ein Verfahren, in dem eine entsprechende Hochtemperaturkomponente eingesetzt wird.

### Hintergrund

Zur Vergasung von Kohle und flüssigen Kohlenwasserstoffen, aber auch zur Herstellung von Wasserstoff und Kohlenmonoxid enthaltendem Synthesegas aus gasförmigen Einsatzstoffen, insbesondere aus Erdgas, kann die sogenannte partielle Oxidation eingesetzt werden. Zu Details und den technischen Hintergründen der partiellen Oxidation kann auf einschlägige Fachliteratur wie den Artikel "Gas Produktion, 2. Processes" in Ullmann's Encyclopedia of Industrial Chemistry, Onlineausgabe 15. Oktober 2015, https://doi.org/10.1002/14356007.o12_o01, Abschnitt 2.2, "Partial Oxidation of Hydrocarbons" verwiesen werden.

Die Reaktionskammer eines für die partielle Oxidation eingesetzten Reaktors wird gewöhnlich von einer feuerfesten Zustellung begrenzt, die ihrerseits von einer Wärmeisolierung sowie einem druckfesten Stahlmantel umgeben ist. Die Reaktionskammer ist im Wesentlichen als senkrecht stehende Zylinder ausgeführt, an dessen oberem Ende ein Brenner angeordnet ist, der als Zuführeinrichtung für den kohlenstoffhaltigen Einsatzstoff und ein Oxidationsmittel dient. Zu ihrem unteren Ende hin verjüngt sich der Querschnitt der Reaktionskammer typischerweise konisch, um schließlich in einem mit Feuerfestmaterial ausgekleideten Rohr zu münden, das eine Abzugseinrichtung für das Syntheserohgas bildet. Ein typischer Brenner weist dabei einen Brennerkopf auf, in dem wenigstens ein erster und ein zwieter Zuführungskanal für die Zuführung von kohlenstoffhaltigem Einsatzstoff und Oxidationsmittel angeordnet sind.

Aus der WO 2011/095274 A2 ist ein entsprechender Brenner bekannt, bei dem zumindest im Bereich des reaktionszonenseitigen Endes des Brennerkopfes die Oberfläche wenigstens des ersten Zuführungskanals durch ein Aluminium enthaltendes Material gebildet ist, während die Oberfläche zumindest des zweiten Zuführungskanals ganz oder teilweise aus einem aluminiumfreien Material besteht. Insbesondere kann dabei als Aluminium enthaltendes Material eine oxiddispersionsverfestigte Superlegierung, ein so genannter ODS-Werkstoff (engl. Oxide Dispersion Strengthened, ODS), eingesetzt werden. Bei Superlegierungen handelt es sich um metallische Werkstoffe, die eine besonders hohe Hitzebeständigkeit, insbesondere im Vergleich zu konventionellen Hochtemperaturlegierungen, aufweisen. Daher kann in entsprechenden Brennern auf eine Wasserkühlung verzichtet und dennoch ein sauerstoffreiches Oxidationsmittel eingesetzt werden.

Die vorliegende Erfindung ist nicht auf die bei der partiellen Oxidation eingesetzten Brenner beschränkt, sondern eignet sich für eine Vielzahl von Brennern, denen neben einem kohlenstoffhaltigen Einsatzstoff (beispielsweise einem Brenngas) ein sauerstoffhaltiges oder sauerstoffreiches Oxidationsmittel zugeführt wird, sowie für andere Hochtemperaturkomponenten wie unten erläutert.

Die Erfindung stellt sich insbesondere die Aufgabe, die Herstellung entsprechender Hochtemperaturkomponenten zu vereinfachen.

### Offenbarung der Erfindung

Vor diesem Hintergrund schlägt die vorliegende Erfindung ein Verfahren zur Ausstattung einer Hochtemperaturkomponente, insbesondere eines Hochtemperaturbrenners, mit einem hochtemperaturfesten Material, eine mittels eines entsprechenden Verfahrens hergestellte Hochtemperaturkomponente, und ein Verfahren, in dem eine entsprechende Hochtemperaturkomponente eingesetzt wird, mit den Merkmalen der unabhängigen Patentansprüche vor. Ausgestaltungen sind Gegenstand der abhängigen Patentansprüche sowie der nachfolgenden Beschreibung.

Im Rahmen von Ausgestaltungen der vorliegenden Erfindung wird zunächst ein Verfahren zur Ausstattung einer Hochtemperaturkomponente mit einem hochtemperaturfesten Material vorgeschlagen, wobei das hochtemperaturfeste Material eine oxiddispersionsverfestigte Superlegierung aufweist und das hochtemperaturfeste Material erfindungsgemäß unter Verwendung eines additiven Fertigungsverfahrens in zumindest einem Teilbereich der Hochtemperaturkomponente bereitgestellt, z.B. als Beschichtung aufgebracht wird.

Zu oxiddispersionsverfestigte Superlegierungen, die im Rahmen der vorliegenden Erfindung zum Einsatz kommen, sowie deren mögliche Komponenten und Ausgestaltungen, Basiswerkstoffe, zur Verfestigung einsetzbare Oxidpartikel und deren Grundelemente usw. sei auf einschlägige Fachliteratur verwiesen. Insbesondere können derartige Materialien sogenanntes PM2000 und/oder Kanthal APM aufweisen.

Die Anwendung der additiven Fertigung ermöglicht den Einsatz des hochtemperaturfesten Materials selektiv nur in Bereichen, an denen das hochtemperaturfeste Material tatsächlich benötigt wird. Ausgestaltungen der vorliegenden Erfindung sehen dabei eine Beschichtung vor, allerdings ist die vorliegende Erfindung nicht auf die Bereitstellung von Beschichtungen beschränkt. Durch den Einsatz der vorliegenden Erfindung ist es damit möglich, aus einem Vorrat an dem hochtemperaturfesten Material bzw. der oxiddispersionsverfestigten Superlegierung, das bzw. die in Form eines Pulvers bereitgestellt ist, je nach Bedarf einzelne Hochtemperaturkomponenten zu fertigen oder entsprechend auszustatten bzw. mit einer Beschichtung zu versehen.

Anders ausgedrückt, kann das additive Fertigungsverfahren mit dem hochtemperaturfesten Material bzw. der oxiddispersionsverfestigten Superlegierung in Form eines Materialpulvers versorgt werden, wobei das Materialpulver bevorzugt in einer Materialmenge bereitgestellt wird, die derart bemessen ist, dass sie zur Herstellung mehrerer Beschichtungen bzw. Fertigung mehrerer Hochtemperaturkomponenten ausreicht.

Stand der Technik ist bis dato die Fertigung von Chargen oxiddispersionsverfestigter Superlegierungen als Vollmatrerial, die meist größer sind als für ihren Einsatz nötig, und die daher typischerweise nicht direkt bzw. vollständig genutzt werden können.

Damit ist die wirtschaftliche Nutzung der Werkstoffgruppe der oxiddispersionsverfestigten Superlegierungen negativ beeinflusst. Die vorliegende Erfindung überwindet diesen Nachteil.

Die additive Fertigung hochtemperaturfester Werkstoffe, die oxiddispersionsverfestigte Superlegierungen aufweisen, gemäß Ausgestaltungen der vorliegenden Erfindung ermöglicht den selektiven Einsatz dieser speziellen Werkstoffe und ist dadurch ressourcenschonend und wirtschaftlich im Vergleich zur konventionellen Herstellung großer Chargen mit anschließender subtraktiver Fertigung.

Zudem kann in Ausgestaltungen der vorliegenden Erfindung ein entsprechendes hochtemperaturfestes Material bei einer Wartung und/oder Reparatur selektiv über die additive Fertigung eingesetzt werden. Darüber hinaus können besonders belastete Bereiche von Hochtemperaturkomponenten mittels additiver Fertigung durch selektive Aufbringung von entsprechendem Material geschützt werden.

Die Ausstattung der Hochtemperaturkomponente mit dem hochtemperaturfesten Material kann somit bei einer Fertigung der Hochtemperaturkomponente, bei einer Reparatur der Hochtemperaturkomponente und/oder bei einer Nachrüstung der Hochtemperaturkomponente durchgeführt werden. Die vorliegende Erfindung ist daher besonders vorteilhaft und flexibel einsetzbar.

Es existieren Publikationen zur Herstellung von oxiddispersionsverfestigten Superlegierungen mittels additiver Fertigung durch selektives Laserschmelzen (engl. Selektive Laser Melting, SLM). Oxiddispersionsverfestigte Superlegierungen sind jedoch nur bedingt über Schmelzverfahren verarbeitbar, und zwar insbesondere aufgrund des Verlustes der Oxide, welche bei hohen Einsatztemperaturen für die Festigkeit verantwortlich sind. In den genannten Publikationen wird deshalb berichtet, dass die Konzentration an Oxiden im Werkstoff nach dem selektiven Laserschmelzen nur noch reduziert vorliegen und dadurch die Festigkeit des Materials nach dem additiven Fertigungsprozess deutlich verringert ist.

Grundsätzlich können unterschiedliche additive Fertigungsverfahren in Ausgestaltungen der vorliegenden Erfindung eingesetzt werden. Insbesondere handelt es sich dabei um nichtaufschmelzende Verfahren, vorzugsweise mit einem sich anschließenden Sinterschritt. In einer Ausgestaltung der vorliegenden Erfindung wird insbesondere das sogenannte Binder Jetting bzw. der Freistrahl-Bindemittelauftrag eingesetzt. Dieses Verfahren beinhaltet keinen Schmelzprozess, da hier nur die einzelnen Pulverpartikel mittels eines Binders in die gewünschte Form gebracht werden und am Ende ein Sinterprozess das Bauteil in seinen endgültigen stabilen Zustand überführt.

Oxiddispersionsverfestigte Superlegierungen bzw. entsprechende Werkstoffe werden auch herkömmlich über einen Sinterprozess hergestellt. Damit basiert der Einsatz des Binder Jetting bzw. anderer nicht aufschmelzender additiver Fertigungsverfahren und anschließendem Sintern auf der positiven Erfahrung aus der konventionellen Fertigung entsprechender Materialien, so dass identische Materialeigenschaften nach Abschluss des additiven Fertigungsprozesses erzielt werden können.

Insbesondere das Binder Jetting eliminiert negative Einflüsse auf Werkstoffeigenschaften bei der Bauteilherstellung durch Pulververarbeitung. Durch Verwendung eines Sinterprozesses anstelle von Schmelzvorgängen kann von unveränderten Werkstoffeigenschaften nach der Verarbeitung ausgegangen werden.

Durch den Einsatz entsprechender additiver Fertigungsverfahren kann das hochtemperaturfeste Material, beispielsweise in einer Beschichtung oder dergleichen, als Gradientenwerkstoff bereitgestellt werden.

Die vorliegende Erfindung ist, wie bereits zuvor erwähnt, nicht auf den Einsatz bei der Fertigung von Hochtemperaturbrennern beschränkt, sondern eignet sich grundsätzlich für andere Hochtemperaturkomponenten in gleicher Weise. Gemäß Ausgestaltungen der vorliegenden Erfindung kann die Hochtemperaturkomponente daher beispielsweise, aber nicht einschränkend, aus einem Hochtemperaturbrenner oder einem Brennerkopf eines Hochtemperaturbrenners, einer Komponente eines Synthesegaskühlers, beispielsweise einer Ferrule in einem entsprechenden Synthesegaskühler, die zum Schutz vor der Korrosionsform des Metal Dusting bereitgestellt ist, oder einer hier vorgesehenen Ventilklappe, oder einem Thermoelement, beispielsweise in einer Ausgangsleitung eines Reformierreaktors, ausgewählt sein.

Aufgrund der Aufbringung des hochtemperaturfesten Materials in der erläuterten Weise ist eine entsprechende Hochtemperaturkomponente gegen Metal Dusting besonders geschützt, so dass die Standzeiten der Hochtemperaturkomponente gegenüber dem Stand der Technik deutlich erhöht ist. Eine entsprechende Erhöhung der Standfestigkeit kann auch besonders selektiv bzw. mit geringerem fertigungstechnischem Aufwand und reduzierten Kosten erzielt werden.

Eine Hochtemperaturkomponente mit einem hochtemperaturfesten Material, das eine oxiddispersionsverfestigte Superlegierung aufweist und die Verwendung eines additiven Fertigungsverfahrens in zumindest einem Teilbereich der Hochtemperaturkomponente sind ebenfalls Gegenstände der vorliegenden Erfindung.

Zu Merkmalen und Vorteilen einer entsprechenden Hochtemperaturkomponente sei auf die obigen Erläuterungen zu dem erfindungsgemäßen Herstellungsverfahren und seiner Ausgestaltungen ausdrücklich verwiesen, da diese Ausgestaltungen die erfindungsgemäße Hochtemperaturkomponente in gleicher Weise betreffen. Dies gilt auch für eine Hochtemperaturkomponente, die unter Verwendung eines Verfahrens gemäß einer Ausgestaltung der Erfindung hergestellt ist.

Zu Merkmalen eines Brenners, der als Hochtemperaturkomponente gemäß einer Ausgestaltung der vorliegenden Erfindung bereitgestellt sein kann, sei insbesondere auf die eingangs erwähnte WO 2011/095274 A2 verwiesen.

Insbesondere kann ein entsprechender Hochtemperaturbrenner einen Brennerkopf aufweisen, der mit mindestens einem ersten Zuführungskanal für die Zuführung eines Brennstoffes bzw. eines kohlenstoffhaltigen Einsatzmaterials der eingangs erläuterten Art und einem zweiten Zuführungskanal für die Zuführung eines Oxidationsmittels ausgestattet ist, wobei der erste und zweie Zuführungskanal durch zwei koaxial zueinander angeordnete Rohre, umfassend ein Außenrohr und ein Innenrohr, gebildet sind, und ein Spalt zwischen den koaxial zueinander angeordneten Rohren den Zuführungskanal für den Brennstoff darstellt.

Insbesondere kann in einer derartigen Ausgestaltung der vorliegenden Erfindung das Innenrohr oder ein Teilbereich desselben das hochtemperaturfeste Material aufweisen, da diese Komponente zumindest in Abschnitten besonders hohen Temperaturen ausgesetzt sein kann.

Ein Verfahren, bei dem eine Hochtemperaturkomponente eingesetzt, die mittels eines Verfahrens mit einem hochtemperaturfesten Material ausgestattet wird, das zuvor in Ausgestaltungen beschrieben wurde, ist ebenfalls Gegenstand der vorliegenden Erfindung.

Ein entsprechendes Verfahren kann insbesondere eine partielle Oxidation umfassen, bei der die Hochtemperaturkomponente als Brenner eingesetzt wird, wobei unter Verwendung des Brenners ein Brennstoff unter mit einem Oxidationsmittel der partiellen Oxidation unterworfen wird.

Falls es sich bei dem Brennstoff bzw. kohlenstoffhaltigen Einsatzmaterial um ein Gas handelt, kann die Absolutgeschwindigkeit im Innenrohr insbesondere 10 und 200 m/s, beispielsweise zwischen 20 und 100 m/s, liegen, während die Geschwindigkeit im Außenrohr zwischen 7 und 180 m/s und insbesondere zwischen 16 und 80 m/s betragen kann. Das Verhältnis der Geschwindigkeiten von Oxidationsmittelstrom und Brenngasstrom kann im Bereich 0,8 bis 1,8 und insbesondere im Bereich 1,0 bis 1,3 liegen. Aufgrund der Geschwindigkeiten für die Reaktionsmedien werden die Querschnitte der die Zuführungskanäle bildenden Rohre festgelegt.

Zur besseren Vermischung der Reaktionsmedien nach ihrem Austritt aus den Zuführungskanälen kann mindestens ein Gaszuführungskanal mit Mitteln zur Erzeugung einer Drallströmung versehen werden. Dabei weisen diese Mittel bevorzugt Strömungskanäle auf, die tangential gegen die Strömungsrichtung geneigt sind. Die Mittel zur Erzeugung einer Drallströmung können verstellbar ausgebildet sein, um unterschiedlich starke Drallströmungen zu erzeugen.

Allgemeiner gesprochen eigent sich ein Brenner gemäß einer Ausgestaltung der Erfindung zur chemischen Umsetzung von gasförmigen und/oder flüssigen und/oder festen Brennstoffen in ein Reaktionsprodukt bei sehr hohen Reaktionstemperaturen. Allgemein können Hochtemperaturkomponenten, die im Rahmen der vorliegenden Erfindung betrachtet werden, bei Temperaturen oberhalb von 1.000 °C, beispielsweise bei 1.100 °C bis 2.000 °C oder von 1.200 °C bis 1.500 °C eingesetzt werden. Eine besondere Eignung besteht dabei für die Vergasung von Kohlenwasserstoffen, die bei höheren Temperaturen mit Sauerstoff bzw. mit einem sauerstoffhaltigen Gas zur Reaktion gebracht werden, wobei mit der vorliegenden Erfindung eine ausreichende Hochtemperaturbeständigkeit und Beständigkeit gegen Korrosion bei gleichzeitig einfacher und ressourcenschonender Fertigung gewährleistet ist. In anderen Ausgestaltungen wird eine entpsprechende Hochtemperaturkomponente auch einer wasserstoffhaltigen Atmosphäre ausgesetzt.

Die erfindungsgemäß verwendeten Werkstoffe im Einsatz als Konstruktionswerkstoff von Brennerspitzen bzw. Brennerköpfen zeichnen sich über ihre hohe Festigkeit bei extremen Temperaturen aus. Durch den Einsatz solcher Werkstoffe kann der regelmäßig auftretende Rückbrand konventionell gefertigter Brennerspitzen eliminiert werden. Die aufwendige Fertigung und limitierte Verfügbarkeit entsprechender Werkstoffe, bspw. aufgrund geringer Nachfrage, kann durch die vorliegende Erfindung im Wesentlichen überwunden werden.

Die Zuführungskanäle entsprechender Brenner, oder zumindest einer dieser Zuführungskanäle, können bzw. kann von einem aus Edelstahl oder Eisen bestehenden Grundmaterial gebildet sein oder ein solches aufweisen. Das erfindungsgemäß bereitgestellte hochtemperaturfeste Material kann insbesondere als Beschichtung auf dem Grundmaterial aufgebracht sein.

### Kurze Beschreibung der Zeichnung

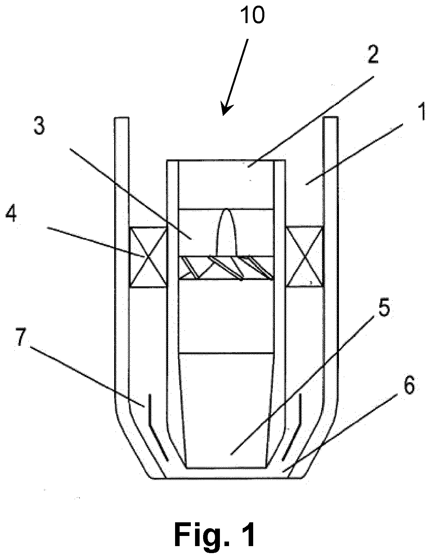

Ausführungsformen der Erfindung werden nachfolgend rein beispielhaft unter Bezugnahme auf die beigefügte Zeichnung beschrieben, wobei Figur 1 einen Brenner gemäß einer Ausgestaltung der Erfindung veranschaulicht.

### Ausführungsform der Erfindung

Die nachfolgend beschriebene Ausführungsform dient lediglich dem Zweck, den Leser beim Verständnis der beanspruchten und zuvor erläuterten Merkmale zu unterstützen. Sie stellt nur ein repräsentatives Beispiel dar und soll hinsichtlich der Merkmale der Erfindung nicht abschließend und/oder beschränkend betrachtet werden. Es versteht sich, dass die zuvor und nachfolgend beschriebenen Vorteile, Ausführungsformen, Beispiele, Funktionen, Merkmale, Strukturen und/oder anderen Aspekte nicht als Beschränkungen des Umfangs der Erfindung, wie er in den Ansprüchen definiert ist, oder als Beschränkungen von Äquivalenten zu den Ansprüchen zu betrachten sind, und dass andere Ausführungsformen verwendet und Änderungen vorgenommen werden können, ohne vom Umfang der beanspruchten Erfindung abzuweichen. Unterschiedliche Ausführungsformen der Erfindung können in geeigneter Weise zweckmäßige Kombinationen der beschriebenen Elemente, Komponenten, Merkmale, Teile, Schritte, Mittel usw. umfassen, aus ihnen bestehen oder im Wesentlichen aus ihnen bestehen, auch wenn solche Kombinationen nicht speziell hierin beschrieben sind. Darüber hinaus kann diese Offenbarung andere Erfindungen umfassen, die gegenwärtig nicht beansprucht werden, die aber in Zukunft beansprucht werden können, insbesondere wenn sie vom Umfang der unabhängigen Ansprüche umfasst sind.

Erläuterungen, die sich auf Vorrichtungen, Apparate, Anordnungen, Systeme usw. gemäß der Ausführungsform der vorliegenden Erfindung beziehen, können auch für Verfahren, Prozesse, Methoden usw. gemäß den Ausführungsformen der vorliegenden Erfindung gelten und umgekehrt.

Im Folgenden soll die vorliegende Erfindung anhand des in Figur 1 schematisch dargestellten Ausführungsbeispiels näher erläutert werden.

Figur 1 zeigt dabei einen Schnitt durch den Brennerkopf 10 eines Brenners in stark vereinfachter, schematischer Darstellung. In dem Brennerkopf 10 sind in dem hier veranschaulichten Ausführungsbeispiel zwei konzentrische Rohre, ein Außenrohr 1 und ein Innenrohr 2, zur Zuführung von Reaktionsmedien in einen Reaktionasraum (nicht darestellt) angeordnet.

In einem äußeren Ringraum zwischen Außenrohr 1 und dem Innenrohr 2 des Brennerkopfs 10 wird im hier veranschaulichten Ausführungsbeispiel Brenngas bzw. ein kohlenstoffhaltiger Einsatzstoff und im Innenrohr 2 Oxidationsmittel dosiert. Das thermisch höher belastete Innenrohr 2 weist dabei ein Aluminium enthaltendes Material in Form einer oxiddispersionsverfestigte Superlegierung auf, die mittels additiver Fertigung bereitgestellt ist, während das Außenrohr 2 aus einem aluminiumfreien Material besteht, wie es im Brennerbau zum Stand der Technik gehört.

Zur besseren Vermischung der Ströme werden diese mittels Drallkörpern 3 und 4 verdrallt. Damit die Brenngasströmung im Austrittsbereich 6 gut anliegt, wird ein Vorflügel 7 am Innenrohr 2 befestigt, dadurch wird gewährleistet, dass allein durch die Gasströmung eine ausreichende Kühlung des Brennerkopfes, insbesondere in den Austrittsbereichen 5 und 6 der Zuführungskanäle, gewährleistet ist.

## Patentansprüche

1. Verfahren zur Ausstattung einer Hochtemperaturkomponente mit einem hochtemperaturfesten Material, wobei das hochtemperaturfeste Material eine oxiddispersionsverfestigte Superlegierung aufweist und unter Verwendung eines additiven Fertigungsverfahrens in zumindest einem Teilbereich der Hochtemperaturkomponente bereitgestellt wird.

2. Verfahren nach Anspruch 1, bei dem das hochtemperaturfeste Material als eine Beschichtung bereitgestellt wird.

3. Verfahren nach Anspruch 1 oder 2, bei dem das additive Fertigungsverfahren mit dem hochtemperaturfesten Material in Form eines Materialpulvers versorgt wird, welches in einer Materialmenge bereitgestellt wird, die derart bemessen ist, dass sie zur Herstellung mehrerer Hochtemperaturkomponenten ausreicht.

4. Verfahren nach einem der vorstehenden Ansprüche, bei dem die Ausstattung der Hochtemperaturkomponente mit dem hochtemperaturfesten Material bei einer Fertigung der Hochtemperaturkomponente, bei einer Reparatur der Hochtemperaturkomponente und/oder bei einer Nachrüstung der Hochtemperaturkomponente durchgeführt wird.

5. Verfahren nach einem der vorstehenden Ansprüche, bei dem ein nichtaufschmelzendes additives Fertigungsverfahren als das das additive Fertigungsverfahren eingesetzt wird.

6. Verfahren nach Anspruch 5, bei dem Binder Jetting als das additive Fertigungsverfahren eigesetzt wird.

7. Verfahren nach einem der vorstehenden Ansprüche, bei dem das hochtemperaturfeste Material als Gradientenwerkstoff bereitgestellt wird.

8. Verfahren nach einem der vorstehenden Ansprüche, bei dem die Hochtemperaturkomponente aus einem Hochtemperaturbrenner, dem Brennerkopf (10) eines Hochtemperaturbrenners, einer Komponente eines Synthesegaskühlers und einem Thermoelement ausgewählt ist.

9. Hochtemperaturkomponente mit einem hochtemperaturfesten Material, wobei das hochtemperaturfeste Material eine oxiddispersionsverfestigte Superlegierung aufweist und unter Verwendung eines additiven Fertigungsverfahrens zumindest in einem Teilbereich der Hochtemperaturkomponente bereitgestellt ist.

10. Hochtemperaturkomponente nach Anspruch 9, die unter Verwendung eines Verfahrens gemäß einem der Ansprüche 1 bis 8 hergestellt ist.

11. Hochtemperaturkomponente nach Anspruch 9 oder 10, die als Hochtemperaturbrenner mit einem Brennerkopf (10) ausgebildet ist, der mit mindestens einem ersten Zuführungskanal für die Zuführung eines Brennstoffes und einem zweiten Zuführungskanal für die Zuführung eines Oxidationsmittels ausgestattet ist, wobei der erste und zweie Zuführungskanal durch zwei koaxial zueinander angeordnete Rohre in Form eines Außenrohrs (1) und eines Innenrohrs (2) gebildet sind, und ein Spalt zwischen koaxial zueinander angeordneten Rohren den Zuführungskanal für den Brennstoff darstellt.

12. Hochtemperaturkomponente nach Anspruch 11, bei dem das Innenrohr (2) oder ein Teilbereich desselben das hochtemperaturfeste Material aufweist.

13. Verfahren, bei dem eine Hochtemperaturkomponente gemäß einem der Ansprüche 9 bis 11 eingesetzt oder mittels eines Verfahrens nach einem der Ansprüche 1 bis 9 mit einem hochtemperaturfesten Material ausgestattet wird.

14. Verfahren nach Anspruch 13, das eine partielle Oxidation umfasst, bei der die Hochtemperaturkomponente als Brenner eingesetzt wird, wobei unter Verwendung des Brenners ein Brennstoff mit einem Oxidationsmittel der partiellen Oxidation unterworfen wird.
